Europäisches Patentamt

European Patent Office

Office européen des brevets

(11) Publication number: **0 589 042 A1**

# EUROPEAN PATENT APPLICATION
## published in accordance with Art. 158(3) EPC

(21) Application number: 92913207.4

(22) Date of filing: 17.06.92

(86) International application number:
PCT/JP92/00773

(87) International publication number:
WO 92/22440 (23.12.92 92/32)

(51) Int. Cl.⁵: **B60R 21/26**

(30) Priority: **17.06.91 JP 144786/91**
**03.07.91 JP 163003/91**
**11.10.91 JP 263715/91**

(43) Date of publication of application:
**30.03.94 Bulletin 94/13**

(84) Designated Contracting States:
**DE ES FR GB IT**

(71) Applicant: **ASAHI KASEI KOGYO KABUSHIKI KAISHA**
**2-6, Dojimahama 1-chome**
**Kita-ku**
**Osaka-shi, Osaka 530(JP)**

(72) Inventor: **HARADA, Tadamasa 1914-1, Aza toyota**

Sakanoichi
Oita-shi Oita 870-03(JP)
Inventor: **SAKAMOTO, Midori 2-490-6, Sakuragaoka**
**Nobeoka-shi**
**Miyazaki 882(JP)**
Inventor: **FUJITA, Tadahiro 3-710-4, Onukicho**
**Nobeoka-shi**
**Miyazaki 882(JP)**

(74) Representative: **Blake, John Henry Francis et al**
**BROOKES AND MARTIN**
**High Holborn House**
**52/54 High Holborn**
**London WC1V 6SE (GB)**

(54) **GAS GENERATOR FOR AIR BAG.**

(57) A gas generator (1) for air bag comprising a vessel (2) internally provided with a combustion chamber (3) containing gas generating agent (5) and igniter (7), in which at least a part of said gas generating agent is formed of a structure composed of a plurality of lapped plate-like bodies (5), projections and recesses (29) are provided on each of said plate-like bodies so that a close-contact surface (25) and non-contact one (26) may be formed on the lapped surfaces of adjacent plate-like bodies, and pressing members (6, 6a) are provided for pressing said close-contact surfaces (25) to prevent the surface (25) from being separated, and, in the case when said vessel is made of aluminum, an ignition agent (21) to ignite within three minutes at a temperature ranging from 150 to 300 °C is contained in the igniter (7).

# Fig.1

EP 0 589 042 A1

TECHNICAL FIELD

The present invention relates to a gas generator for an air bag, and more particularly, the present invention relates to a gas generator for an air bag including a container provided with a combustion chamber therein, and a gas generating agent and an igniter accommodated in the combustion chamber.

BACKGROUND ART

An air bag device, as is well known, is a safety device to protect vehicle occupants in the case of a traffic accident such as a collision. This air bag device protects the occupants in the vehicle because an air bag attached to a steering wheel or an instrument panel is inflated and developed by gas generated by burning a gas generating agent when a vehicle is suddenly stopped or decelerated in the case of a traffic accident, and the inflated air bag serves as an air cushion interposed between an occupant and the vehicle structure to prevent an occurrence of secondary collisions in the vehicle.

Various types of gas generators have been used for inflating and developing the air bag. It is common that a molded gas generating agent is contained in a gas generator and ignited by the igniter so as to be burnt concurrently, as disclosed in Japanese Examined Patent Publication No. 2-33646 and Japanese Unexamined Patent Publication No. 1-230491. Also, Japanese Unexamined Patent Publication No. 2-88487 discloses a gas generator in which a gas generating agent is formed in a plate-shape molded member, and protruded and recessed portions are formed on the surface of the plate-shape molded member for facilitating a concurrent combustion of the gas generating agent by the igniter, and United States Patent No. 4249673 discloses a gas generator in which a spring is provided around an igniter for improving combustibility and vibration enduring properties.

However, in these known gas generators, especially when the air bag is provided for a passenger's seat, there is a disadvantage that the air bag suddenly rushes out from the container since a large amount of gas is generated in the beginning of its operation, and a crew member may be injured rather than protected. There is a possibility that if a child is at a position near the air bag attachment, he may be knocked by the inflated air bag. In order to overcome this disadvantage, several improved gas generating techniques have ben proposed for gently generating the gas at the beginning of the operation. For example, in one method, a small amount of gas generating agent is burnt in advance by dividing a gas generating chamber into two sections (Japanese Unexamined Patent Publication No. 3-548), or a plurality of sections (Japanese Examined Patent Publication No. 63-54853), and in another method, the combustion pressure is controlled by changing the area of a gas discharge hole so that the combustion speed is successively increased (Japanese Examined Patent Publication No. 63-1218).

However, there are problems in these methods; the gas generator having a plurality of combustion chambers needs a number of parts and a complicated assembly process, the reliability of the propagation of a flame from one chamber to another is low; changing the combustion pressure suffers from the low reliability of a pressure seal and from the accuracy by which parts must machined.

On the other hand, the gas generator for an air bag must generate a large amount of gas immediately after the start of its operation, and it is necessary to design the gas generator so that it can resist the high pressure generated by combustion. Therefore, conventionally, a heavy steel container of pressure-resistant structure is commonly used. However, considering that the weight of vehicles is being reduced in accordance with the energy saving requirements, there is an increasing demand for reducing the weight of an air bag device. For this purpose, a proposal has already been made to use aluminum for the container of the gas generator for an air bag.

Although aluminum is superior to steel in the viewpoint of weight reduction, a container made of aluminum is seriously defective at high temperatures compared with a container made of steel.

That is, when a gas generator is in a fire, the gas generating agent usually catches fire at a temperature in the range from 340 to 400°C, and, as the mechanical strength of aluminum is lower at such a high temperature, the aluminum container cannot resist the high pressure generated by the combustion of the gas generating agent and, simultaneously with or prior to the inflation of the air bag, the container may explode into a number of small pieces which scatter to cause a very dangerous situation.

There are proposals to solve this problem. For example, United States Patent No. 4,561,675 discloses a gas generator in which a firing agent automatically fired at a relatively low temperature of 177°C (350°F) at which the strength of aluminum is not lowered, is provided adjacent to an igniter.

In this gas generator, the aforesaid automatic firing agent is fired at the temperature of about 177°C to fire the igniting agent, and the gas generating agent is then ignited. At the temperature of about 177°C, the pressure durability of the aluminum container is high enough that the container is not damaged and small

3

pieces of the container are not scattered. However, it is necessary to provide another container for accommodating the automatic firing agent in this gas generator, and the production cost rises, and the number of assembling processes is disadvantageously increased.

Another proposal is made in which a uniform mixture containing an automatic firing agent and an igniting agent is charged into a firing device (United States Patent No. 4,858,951). However, in this type gas generator, since the automatic firing agent to be automatically fired is mixed with the igniting agent and the automatic firing agent is not necessary in contact with a wall of the igniter, the automatic firing agent is not necessarily activated first and the reliability is low.

SUMMARY OF THE INVENTION

The first object of the present invention is to provide a highly reliable gas generator for an air bag in which gas is gently generated at the beginning of its operation so that an occupant can be protected from the shock of a collision without being injured.

The second object of the present invention is to provide a gas generator in which a firing agent is surely and automatically fired to ignite a gas generating agent when a fire occurs before the temperature of the aluminum container of the gas generator reaches a temperature at which the strength of aluminum is lowered. The gas generator is thus made safe and reliable and does not need an increase in the number of parts and the number of assembly steps.

In order to accomplish the first object of the present invention, the inventors made investigations and found that it is effective to form close-contacting and noncontacting portions on the surfaces of laminated gas generating agent molded members so as to form slightly protruded and recessed portions on the laminated gas generating agent molded members under a certain condition.

Accordingly, the first object of the present invention is accomplished by a gas generator for an air bag, comprising a container having a combustion chamber therein, and a gas generating agent and an igniter accommodated in said combustion chamber, wherein at least a portion of said gas generating agent is formed as a plurality of laminated plate-shaped molded members, and protruded and recessed portions are provided on said plate-shaped molded members so that close-contacting and noncontacting portions can be formed on overlapping surfaces of the adjoining plate-shaped molded members, a holding member being provided for holding the gas generating agent so that the close-contacting surfaces are not separated from each other.

Various configurations can be employed for the plate-shaped molded members in accordance with the configuration of the combustion chamber. For example, the plate-shaped molded member may be formed in a doughnut-shape having a main gas passage hole at the center thereof. The recessed portions provided between the adjoining plate-shaped molded members can also be formed into various configurations. For example, the recessed portions may be formed in a ring-shape extending radially outwardly from the main gas passage hole, a ring-shape extending from the outside of the doughnut-shaped molded member toward the center thereof, or a plurality of grooves extending radially outwardly from the main gas passage hole. The configuration of the grooves may be a sector expanding from the main gas passage hole toward the outside, or the grooves may pass through the plate-shaped molded member from the main gas passage hole to the outside.

It is preferable that a distance between the noncontact surfaces of the overlapping portion is in the range from 0.05 to 0.5 mm, and a ratio of the area of the noncontact portion to that of the entire overlapping portion is in the range from 5 to 70%.

It is preferable that the holding member holds the gas generating agent with holding force in the range from 0.05 to 10 kg/cm$^2$. It is also preferable that the holding member comprises a metallic spring, and that the spring diameter or the plate thickness is not more than 5 mm. It is also preferable that combustible substance molded member is disposed close to the holding member.

In order to accomplish the second object of the present invention, the inventors earnestly made investigations and found that it is effective to use an igniting agent of a specific composition contained in an igniter, such that the igniting agent is automatically fired at a high temperature at which the aluminum container still maintains a sufficient pressure durability, which leads the present invention.

The second object of the present invention can be accomplished by a gas generator for an air bag comprising a container having a combustion chamber therein, and a gas generating agent and an igniter accommodated in the combustion chamber, wherein said container is made of aluminum, and an igniting agent contained in the igniter is one fired at the temperature in the range from 150 to 300°C within 3 minutes.

4

It is preferable that the igniting agent comprises a binder containing sulfur, and ammonium perchlorate, and the binder containing sulfur is polysulfide resin. Also, it is preferable that powder of a simple substance of metal, alloy and intermetallic compound of a metal selected from a group of Al, B, Si, Mg, Ti, Zr and Ni is further added to the igniting agent.

BRIEF DESCRIPTION OF THE DRAWINGS

Fig. 1 is an axial cross-sectional view showing an embodiment of the gas generator of the present invention.

Fig. 2 is an axial cross-sectional view showing an example of the laminated arrangement of gas generating agent plate-shaped molded members used in the gas generator shown in Fig. 1.

Fig. 3 is a transverse cross-sectional view taken along the line III-III in Fig. 2.

Fig. 4 is a diagrammatic view showing another example of the laminated arrangement of the gas generating agent plate-shaped molded members, wherein Fig. 4(A) is an axial cross-sectional view, and Fig. 4(B) is a transverse cross-sectional view.

Fig. 5 is a diagrammatic view showing still another example of the laminated arrangement of the gas generating agent plate-shaped molded members, wherein Fig. 5(A) is an axial cross-sectional view, and Fig. 5(B) is a transverse cross-sectional view.

Figs. 6 to 8 are transverse cross-sectional views showing further examples of the gas generating agent plate-shaped molded members.

Fig. 9 is a partial axial cross-sectional view of another embodiment of the gas generator of the present invention.

Fig. 10 is a partial axial cross-sectional view of still another embodiment of the gas generator of the present invention.

Fig. 11 is an axial cross-sectional view showing an example of the gas generator to which the construction of the present invention can be applied.

Best Mode for Carrying Out the Invention

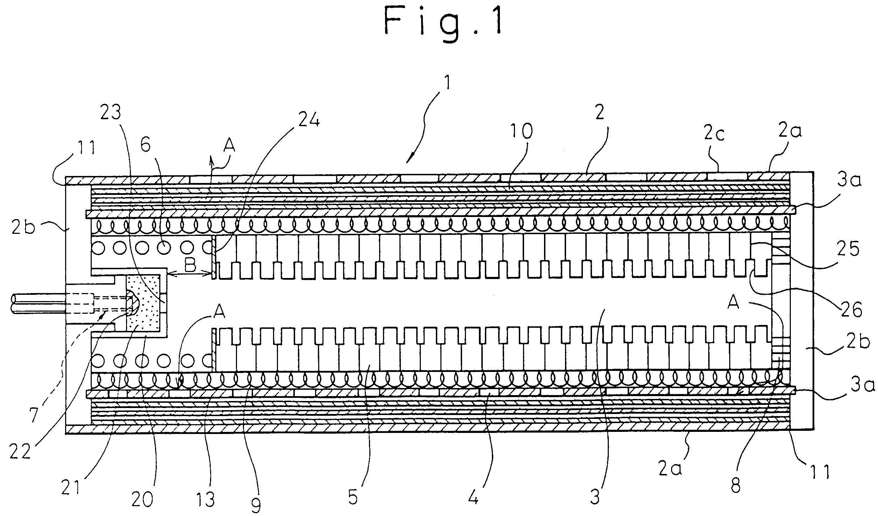

With reference to Figs. 1 to 10, an example of the gas generator to accomplish the first object of the present invention will be described first.

Fig. 1 is a cross-sectional illustration for explaining the construction of a gas generator 1 of the present invention. In Fig. 1, numeral 2 represents a container, numeral 2c represents a gas outlet provided on a barrel surface 2a of the container 2, numeral 3 represents a combustion chamber, numeral 4 represents a combustion chamber gas outlet provided in the combustion chamber, numeral 5 represents a gas generating agent plate-shaped (disk-shaped) molded member, numeral 6 represents a holding member of the gas generating agent plate-shaped molded body, numeral 7 represents an igniter, numeral 8 represents a gas passing member, numeral 9 represents an inner filter, numeral 10 represents an outer filter, numeral 11 represents a welding portion for welding the barrel surface 2a of the container 2 to an end surface 2b, numeral 13 represents a gas passage, character A represents a combustion gas flow (in the illustrated example, gas blows out from the combustion chamber gas outlet 4, passes through the gas passage 13 or the outer filter 10 in the circumferential direction, and emerges from the upper gas outlet 2 to the outside of the generator to inflate and develop the air bag), and character B represents a space for the gas generating agent plate-shaped molded body.

Numeral 20 represents an igniter cap, numeral 21 represents an igniting agent, and numeral 22 represents a firing agent. A flame discharging hole 23 is formed in the center of the igniter cap 20, and the flame discharging hole 23 is usually sealed from the inside.

Also, a cushion member 24 is disposed between the holding member 6 (in this case, a coil spring is used for the holding member 6) and the gas generating agent 5 for preventing a surface of the gas generating agent 5 from being damaged. It is preferable that the cushion member 24 is made of ceramic paper.

The gas passing member 8 may be made of any material through which gas can pass, and laminated meshes are preferably used. The inner filter 9 is disposed inside the combustion chamber for cooling a combustion gas flow and collecting the residue. For example, rough laminated metallic meshes of 12 to 60# are usually used for the inner filter 9, or a press-formed member of metallic meshes can be used.

The diameter and number of the combustion chamber outlets 4 provided in the gas combustion chamber are determined by the combustion characteristics of the gas generating agent 5, but it is designed such that the position of the combustion chamber gas outlets 4 do not overlap the gas outlets 2c formed in the container 2 so that the combustion gas discharged from the gas outlets 4 cannot directly rush to the outside of the container 2.

The outer filter 10 comprises metallic meshes and a rolled ceramic filter. In this case, the metallic meshes are 20# to 100#, and the ceramic filter may be made of alumina silicate, and when necessary, sintered metallic nonwoven fabric may be used.

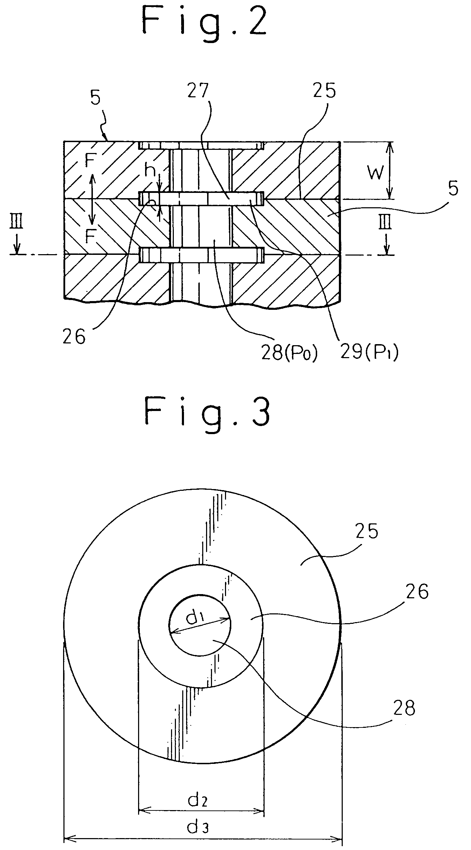

With reference to Figs. 2 to 8, various embodiments of the gas generating agent plate-shaped molded members used in the gas generator of the present invention will be explained.

Figure 2 is an axial cross-sectional view showing the laminated structure of the gas generating agent plate-shaped molded members 5 used in the gas generator shown in Fig. 1, and Fig. 3 is a transverse cross-sectional view taken along the line III-III in Fig. 2. The plate-shaped molded members 5 are formed in a doughnut-shape having a main gas passage hole 28 at the center thereof, and a close-contact surface 25 and a noncontact surface 26 are formed between the adjoining plate-shaped molded members, so that a recessed portion 29 is formed in the plate-shaped molded members on the side of the main gas passage hole 28. The dimensions of the plate-shaped molded members 5 may vary depending on the use of the gas generator 1. For example, the diameter $d_1$ = 9 mm, $d_2$ = 22 mm, $d_3$ = 34 mm, and the thickness W = 3.2 mm.

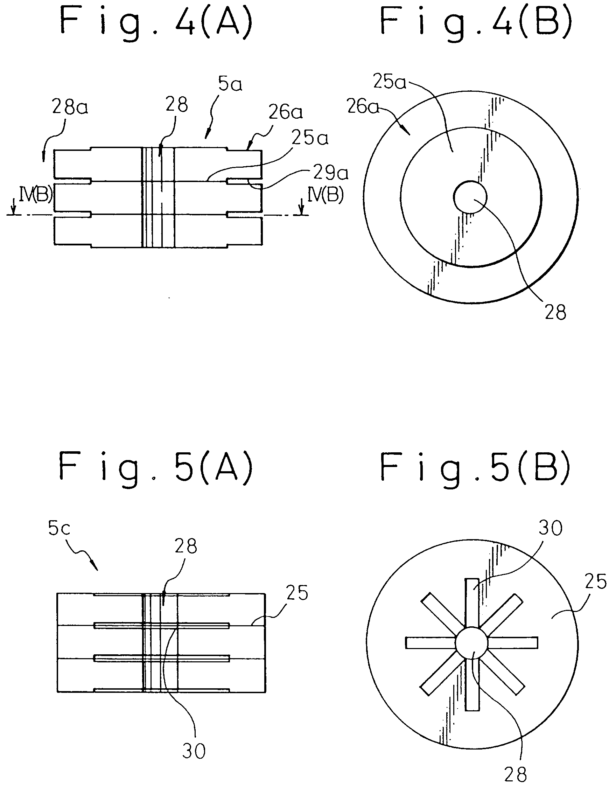

In the plate-shaped molded members 5a shown in Fig. 4, a recessed portion 29a is formed at the exterior side of the plate-shaped molded members 5a. Consequently, the close-contacting surface 25a is formed on the side of the main gas passage hole 28, and the noncontact surface 26a is formed facing the passage 28a for passing the main gas flowing outside of the plate-shaped molded member 5a.

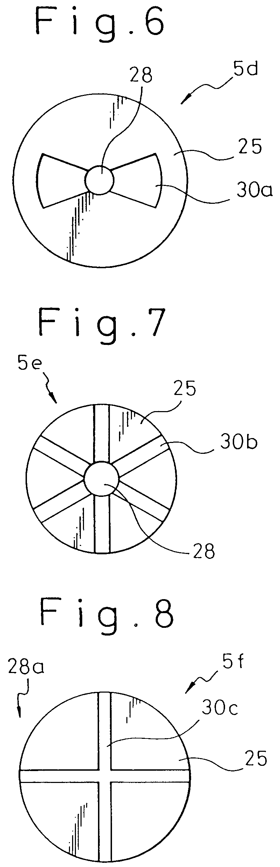

Recessed portions of the plate-shaped molded members shown in Figs. 2 to 4 are commonly formed in a ring-shape. The recessed portion may be formed in the form of a plurality of grooves 30 as shown in Fig. 5. The grooves 30 may be parallel, as shown in Fig. 5, or the grooves 30a may be formed in the form of a sector expanding from the main gas passage hole 28 to the outside, as shown in Fig. 6. The grooves 30b may penetrate through the gas generating agent from the main gas passage hole 28 to the outside, as shown in Fig. 7. Further, as shown in Fig. 8, only grooves 30c crossing each other may be formed, without a specially provided main gas passage hole 28.

The plate-shaped molded members can be easily obtained by using a mold having a predetermined configuration, and pressing the gas generating agent metered to a predetermined amount with a pressing pressure of 1 to 3 t/cm$^2$.

Next, an operation of the gas generator of the present invention will be explained with reference to Figs. 1 and 2.

When a firing current flows to the igniter 7, the firing agent 22 is burnt and the igniting agent 21 is then burnt. Then, hot gas and hot particles break a seal and flow into the combustion chamber 3 through the flame outlet 23. by these hot gas and hot particles, a portion of the surface of the gas generating agent except for the close-contact portions 25 starts burning. At this time, the noncontact surfaces 26 (area Al) also burn, and the combustion gas flows through the outlet 27 (area Ap) to the central hole. When a ratio of Al/Ap is high at this time, that is, when the outlet area is smaller than the combustion area of the noncontact surface (usually, the ratio of Al/Ap is not less than 10, and preferably, it is in the range from 20 to 200), the pressure Pl in the noncontact surfaces 26 becomes higher than the pressure Po in the central hole 28. Therefore, a force (F) acts so as to separate the close-contact surfaces of the gas generating agent molded bodies. This force F is very weak under the condition of Al/Ap < 10, may be too weak even under the condition of Al/Ap < 20. When the ratio of Al/Ap exceeds 200, the width of the noncontact surfaces becomes too narrow, so that the manufacture of the molded members may become difficult. The holding member overcomes this force F at the beginning of combustion, but in the case where the holding force of the holding member is reduced by the influence of heat of the generated gas, or in the case where the force F is very strong, a plurality of plate-shaped molded members are successively peeled one by one from the end of the agent, so that the surfaces of the close-contact portions start burning and so the burning area is successively increased to increase the gas generating speed. Accordingly, it is necessary to provide a space in which the molded members can be moved in the combustion chamber. The space B in which the gas generating agent plate-shaped molded members can be moved is determined in accordance with the number of the gas generating agent plate-shaped molded members to be charged in the container. For example, if 50 molded members are charged, the space B is approximately 10 mm. When the combustion area is successively increased as described above, the amount of generated gas is increased, so that a gentle gas flow can be realized at the beginning of combustion. In this connection, the combustion gas flows along the gas passage A shown in Fig. 1, and passes through the combustion chamber outlets 4. Then, the combustion gas passes through the outer filter 10, and is vented to the outside (the air bag) through the gas discharging holes 2c.

The characteristics of the gas generator of the present invention reside in the provision of the recessed portions (or the provision of protruded portions) on the surface of the gas generating agent, to provide pressure unbalance portions so as to allow a plurality of the laminated plate-shaped molded members of the gas generating agent to be automatically peeled off one by one to increase the combustion area.

When the combustion at the close-contact surfaces, the combustion area is increased, so that the gas generating speed is increased and the combustion chamber pressure is also increased. With the increase in pressure, the combustion speed of the gas generating agent is also increased, and further an amount of generated gas is increased. For this reason, it is required to provide a container having a thick (and thus heavy) wall to endure high pressure. In order to avoid this, it is preferable to employ a gas generating agent having a low pressure exponent (the relationship between the combustion speed r and the pressure p is usually expressed by $r = ap^n$ where a is a constant and n is a pressure exponent). The pressure exponent n of a gas generating agent mainly including $NaN_3$ is usually in the range from 0.1 to 0.8, the pressure exponent being preferably not more than 0.6, and more preferably no more than 0.35. The inflater is usually provided with not only an environmental seal but also a pressure seal for sealing the combustion gas until the pressure is increased to a certain value at the beginning of ignition (due to this, a sufficient igniting operation can be conducted). This pressure seal is constructed to burst and release the combustion gas when the inflater pressure is increased to a predetermined value. It is effective to provide a plurality of pressure seals of different breakdown pressures (for example, Japanese Examined Patent Publication No. 63-1218), and when the pressure is increased, an additional pressure seal for high pressure use is activated so that the pressure is not increased to a predetermined value.

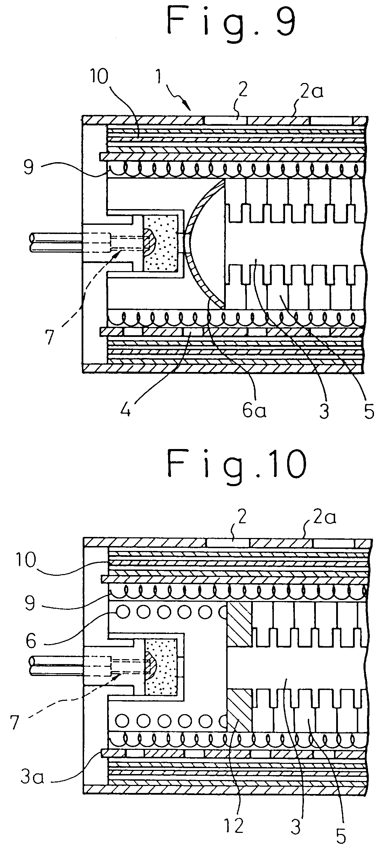

Figure 9 shows an example in which the molded member holding member 6 of Fig. 1 is replaced by a concave disk-shaped perforated leaf spring. Fig. 10 shows an example in which a combustible substance molded member 12 is employed in the gas generator of Fig. 1. This combustible substance molded member 12 is fired by the igniter and produces particles at a high temperature so as to help the gas generating agent to be ignited, and to heat the holding member to reduce the holding force.

According to the present invention, any gas generating agent distributed for an air bag can be used without any limitation, but it is preferable to use a gas generating agent having a low pressure exponent, as described above. Regarding the combustible substance molded member, any conventional substance can be used as long as the substance is provided with the aforesaid function. For example, thermit type powder such as magnesium, Teflon and $B/KNO_3$ may be used. For the holding member of the gas generating agent, a known metallic coil spring or a known leaf spring made of stainless steel, aluminum, shape memory alloy and iron may be used, in which resilience of the spring is lost when heated by the combustion gas (preferably at the temperature in the range from 120 to 1000 °C). Further, an aluminum mesh or a honeycomb may be used which fuses and loses its holding force when heated.

In the present invention, it is preferable that the width h of the noncontact portions is 0.05 to 0.5 mm. In the case of a width narrower than 0.05 mm, the noncontact portions become identical to the close-contact portions, and in the case of a width wider than 0.5 mm, the force F becomes too weak. The design of the width of the noncontact portions may depend on the thickness or the diameter of the gas generating agent which will be determined by the combustion speed of the gas generating agent, but it is preferable that the width of the noncontact portions is below 20% of the thickness of the gas generating agent. Also, it is preferable that a ratio of the area of the noncontact portion to that of the entire overlapping portion (the total area of the close-contact and noncontact portions), is in the range from 5 to 70%. When the ratio is lower than 5%, the force F is too weak, and when the ratio is higher than 70%, an amount of generated gas is increased too much at the beginning of gas generation to establish the intended object. Also, it is preferable that the holding force of the holding member for holding the gas generating agent molded members is in the range from 0.05 to 10 $kg/cm^2$. When the holding force is smaller than 0.05 $kg/cm^2$, it is too weak and the molded members may be broken by vibration of the inflater. When the holding force exceeds 10 $kg/cm^2$, the close-contact portions are separated too late. Therefore, it is preferable that the diameter or the thickness of the holding member is not more than 5 mm. In the case where the diameter or the thickness of the holding member exceeds 5 mm, it takes too long to reduce the resilience of the holding member when heated.

Next, the gas generator to accomplish the second object of the present invention will be explained.

The container of this gas generator is made of aluminum or aluminum alloy. Aluminum alloy may preferably comprise Mg alloys (JIS 5083), Mg-Si alloys (JIS 6061) or Zn alloys (JIS 7075).

The igniting agent charged in the igniter according to the present invention can be automatically fired at the temperature in the range from 150 to 300 °C within 3 minutes to immediately fire the gas generating agent, prior to a time when a remarkably reduction in the strength of the container occurs and the aluminum container maintains a sufficient pressure durability in the event where the gas generator is put in a high temperature atmosphere of a fire. By this feature, it is possible to avoid a danger when the gas generator having an aluminum container is engulfed by a fire.

In this connection, in the case of aluminum alloys, the strength is lowered due to a change in the grain boundary. Therefore, when an aluminum container is exposed to a high temperature atmosphere for a long period of time, its strength may be lowered, but the pressure durability of the aluminum container can be maintained for a short time even at a high temperature.

A preferable example of the igniting agent of the present invention having such a function is a powder composition comprising (A) a binder containing sulphur and (B) ammonium perchlorate. Examples of usable binder containing sulphur components are, for example, polyorganic sulfide condensed from halide and alkali sulfide, polysulfide resin of ring-opening polymer of ring sulfide such as propylene sulfide, and sulphur polymer and prepolymer of sulphur polybutadiene. It is especially preferable to use polysulfide resin of polyorganic sulfide, which is a liquid polymer having a mercapto end group, and it is preferable that the molecular weight is approximately 1,000. One of the examples of binder containing sulphur is described as follows:

$$HS\ (C_2H_4\text{-}OCH_2OC_2H_4\text{-}SS)\ C_2H_4OC_2H_2OC_2H_4SH\ (n\ =\ 3\ to\ 10)$$

The ammonium perchlorate component is preferably used for an igniting agent component in the case where the aluminum container is used. In this component, a phase transition of ammonium perchlorate occurs at the temperature of about 230°C at which the strength of aluminum is lowered. At the temperature above 230°C, this component becomes unstable and tends to react to chemical treatments, however, at the temperature below 230°C, this component is very stable. From this viewpoint, this component is superior to cellulose nitrate used for an automatic firing agent in the above described United States Patent. Cellulose nitrate is inferior in a storage stability, and decomposition may occur with the lapse of time. Further, when the gas generating agent is ignited, the igniting capacity of the igniting agent component of the present invention is superior to that of cellulose nitrate, so that the composition itself can be used as an igniting agent. Also, when necessary, a (C) component of flammable metallic powder component may be added to the above described (A) and (B) components. For example, Al, B, Si, Mg, Ti, Zr and Ni are preferably used for the (C) component. These elements can be used in any of the forms of simple substance of metal, alloy, intermetallic compound and mixture of them. It is preferable that the particle size of metallic powder is in the range from 1 to 50 $\mu$m. For example, Al-Mg alloy and Zr-Ni alloy are preferably used for the alloy. Also, for example, ZrB and FeSi are preferably used for the intermetallic compound. When the igniting agent is fired, the metallic powder of the (C) component becomes high temperature particles and adheres to the gas generating agent to cause the gas generating agent to be burnt immediately. This is especially advantageous when the ignition property of the gas generating agent is not good.

In the present invention, a preferable weight ratio among the (A), (B), and (C) components of the gas generating agent is A:B:C = 5 to 40:40 to 90:0 to 30, and more preferably, A:B:C = 5 to 50:50 to 85:5 to 20. When necessary, a stabilizer, a hardening agent, a hardening accelerator, a tackifier (a flexible agent comprising, for example, an epoxy resin and a reaction accelerator), an epoxy resin, a plasticizer, a cross linking agent such as sulphur, and a decomposition catalyst for ammonium perchlorate such as a compound of Cr, Cu and Fe, may be added to the firing agent. Also, a general composition is described on page 93 of "Powder Handbook" published by Kyoritsu Shuppan Co. in Japan.

As described above, the igniting agent used for the gas generator to accomplish the second object of the present invention is automatically fired at a relatively low temperature at which the aluminum container maintains a sufficient mechanical strength to endure the generated gas pressure.

This is the most important part of the present invention. Conventionally, Mg-Teflon and B-KNO$_3$ are used for the igniting agent and all of them are ignited at a temperature, above 400°C, at which the mechanical strength of an aluminum container is lowered so that it will burst and pieces of the broken container are scattered, leading to a very dangerous situation.

In the case of a gas generator disclosed in United States Patent No. 4,561,675, a low temperature automatic firing agent is used, but an igniting agent is of the type conventionally used which is ignited at a high temperature.

On the other hand, according to the present invention, the above described igniting agent which is ignited at a temperature from 150 to 300°C within 3 minutes is used. Preferably, an igniting agent ignited at a temperature from 180 to 250°C is selected. Of course, the igniting agent of the present invention may be used as a low temperature automatic firing agent in the embodiment of United States Patent No. 4,561,675 and No. 4,858,951.

Also, it is preferable that the igniting agent of the present invention is provided at such a position that the igniting agent can be easily heated from the outside so that the igniting agent is sensitive to the outside heat, that is, it is preferable that a firing agent housing in which a firing agent is charged forms a portion of the gas generating agent container, or that the firing agent housing is in contact with the wall of the container, and in the case where a heat insulating layer is provided between the containers, that the thickness of the insulating layer is very small. The technical concept wherein the igniting agent itself is selected from a group of powders capable of being automatically ignited at a temperature at which the aluminum container can maintain a sufficient pressure durability to solve the serious problem of the explosion of the aluminum container is an original idea of the present inventor. In the present invention according to this technical concept, it is not necessary to provide a special container for accommodating an automatic firing agent which is provided in the gas generator disclosed in the above described United States Patent, and the safety of the aluminum gas generator can be enhanced without increasing the number of parts or assembling steps.

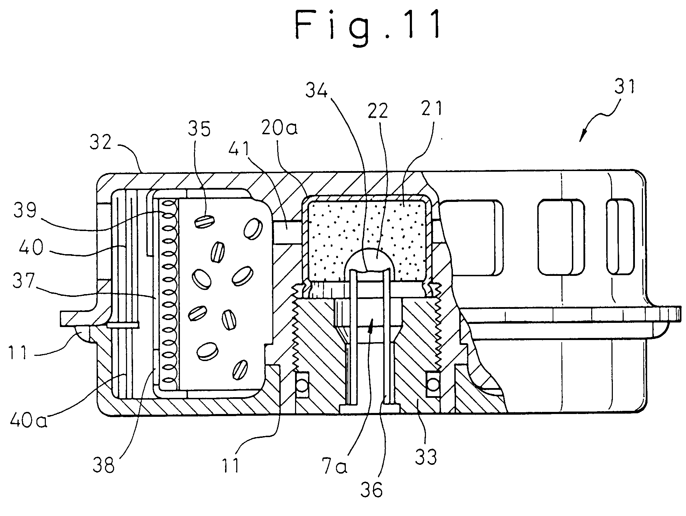

Next, with reference to Fig. 11, an action of the igniting agent composition of the present invention will be explained in detail.

Figure 11 is a cross-sectional view for explaining the construction of a gas generator 31 of the present invention. In Fig. 11, numeral 32 represents an aluminum container, numeral 7a represents an igniter, numeral 33 represents a holding member for holding the igniter, numeral 34 represents a fuse used for ignition, numeral 35 represents a gas generating agent (in this case, the gas generating agent is formed in a pellet-shape), numeral 36 represents a pin used for ignition, numeral 37 represents an inner cylinder for dividing the combustion chamber (in this case, the inner cylinder comprises 2 parts for providing flexibility), numeral 38 represents a gas outlet provided in the inner cylinder (the gas outlet is sealed with a piece of aluminum foil before the gas generator is activated), numeral 39 represents an inner filter, numeral 40a represents a lower filter (both filter 39 and 40a are formed of laminated metallic meshes of 8 tp 60# or pressed metallic meshes), and numeral 40 represents an outer filter (the outer filter is composed of rolled metallic meshes and ceramic filters, wherein the metallic meshes are 20 to 100#, and the ceramic filter is preferably made of alumina silicate, if necessary, sintered nonwoven fabric may be used).

In the gas generator 31, when a predetermined amount of current flows through the fuse 34, the fuse is heated and the firing agent 22 is ignited. The igniting agent 21 is then ignited, and a flame (hot gas and hot particles) from the igniting agent 21 passes through the flame outlet 41 to ignite the gas generating agent 35. After the combustion gas (containing the residue) of the gas generating agent 35 has been cooled and filtered by the inner filter 39, it passes through the gas outlet 38, is cooled and minute residual particles are filtered by the lower and outer filters 40a and 40 and is discharged to the outside of the system.

When this gas generator 31 is heated from the outside in the case of a fire, the igniting agent 21 of the present invention is heated by the heat transmitted through the aluminum container 32 and the igniter cap 20a, so that the igniting agent 21 is automatically ignited and breakage of the container is prevented.

As described above, the igniting agent is important for the aluminum container of the present invention, and other articles such as the gas generating agent and the filter are not particularly limited.

With reference to the following example, the present invention will be described in further detail. An igniting agent composition was prepared in the following composition.

| Binder Composition | |
|---|---|
| Polysulfide resin Lp33 (Chiokoru Co.) | 100 weight parts |
| Sulphur | 1 |
| Paraquinone dioxime (hardening agent) | 7 |
| Hardening assistant | 5 |
| Tackifier (flexible additive) | 5 |

| Igniting agent composition | |
|---|---|
| Ammonium perchlorate | 64 weight parts |
| Aluminum (particle size: 20 $\mu$m) | 15 |
| Binder composition | 21 |

First, the binder components are sufficiently mixed in advance. Next, aluminum and ammonium perchlorate are added and mixed, and then grains of a predetermined shape are made. The grains are heated to about 80°C for 4 days. In this way, the igniting agent composition can be provided. In the case where the grain making property is not good, inert grains such as grains of $SiO_2$ may be added.

An automatic firing condition of this igniting agent was measured. The result of the measurement is shown as follows.

| Firing temperature (°C) | 215 | 230 | 250 | 280 |
|---|---|---|---|---|
| Firing time (Sec) | 300< | 31 | 15 | 6 |

This igniting agent having the weight of 1.5g was made granular, and charged into the aluminum gas generator of Fig. 11. Then the gas generator was put into a fire. The igniting agent was automatically fired, and the gas generator container was not broken.

In this connection, the aforesaid igniting agent may be applied to a gas generator having a structure shown in Fig. 1, wherein the container is made of aluminum.

Field of Utilization in Industry

As explained above, in the gas generator to accomplish the first object of the present invention, gas generation is gently conducted at the beginning of its operation, so that a vehicle occupant can be reliably protected from shock caused by a collision without being injured by the air bag that may otherwise suddenly rush out. Therefore, the gas generator is highly reliable. In the gas generator to accomplish the second object of the present invention, different from a type of gas generator in which a booster agent is mixed with an igniting agent, the igniting agent is positively heated when heat is transmitted from the outside, so that the igniting agent is automatically ignited at a predetermined temperature. Consequently, when the aluminum gas generator of the present invention is employed, even when it is in a high temperature atmosphere in the case of a fire, it is possible to reliably avoid the danger in which the container may burst and pieces of the container scatter. Further, it is not necessary to provide additional parts and the number of assembling steps is not increased.

List of Reference Numerals

| | |
|---|---|
| 1 | Gas generator |
| 2 | Container |
| 2a | Container barrel surface |
| 2b | Container end surface |
| 2c | Gas outlet |
| 3 | Gas combustion chamber |
| 3a | Gas combustion chamber wall |
| 4 | Combustion chamber gas outlet |
| 5 | Gas generating agent plate-shaped molded member |
| 6, 6a | Holding member |
| 7 | Igniter |
| 8 | Gas passing member |
| 9 | Inner filter |
| 10 | Outer filter |
| 11 | Welded portion |
| 12 | |
| 13 | Gas passage |
| 20 | Igniter cap |
| 21 | Igniting agent |
| 22 | Firing agent |
| 23 | Flame discharging hole |
| 24 | Cushion member |
| 25 | Close-contact surface |
| 26 | Noncontact surface |
| 27 | Outlet |

EP 0 589 042 A1

| 28 | Main gas passage hole |
| 29 | Recessed portion |
| 30 | Groove |
| 31 | Gas generator |
| 32 | Aluminum container |
| 33 | Holding member |
| 34 | Fuse |
| 35 | Gas generating agent |
| 36 | Pin |
| 37 | Inner cylinder |
| 39 | Inner filter |
| 40 | Outer filter |
| 40a | Lower filter |
| 41 | Flame discharge hole |
| A | Combustion gas flow |
| B | Gas generating agent plate-shaped molded member movement |

**Claims**

1. A gas generator for an air bag, comprising a container having a combustion chamber therein, and a gas generating agent and an igniter accommodated in said combustion chamber, wherein at least a portion of said gas generating agent is formed as a plurality of laminated plate-shaped molded members, and protruded and recessed portions are provided on said plate-shaped molded members so that close-contacting and noncontacting portions can be formed on overlapping surfaces of the adjoining plate-shaped molded members, a holding member being provided for holding the gas generating agent so that the close-contacting surfaces are not separated from each other.

2. The gas generator for an air bag according to claim 1, wherein said plate-shaped molded member is formed in a doughnut shape having a main gas passage hole at the center thereof.

3. The gas generator for an air bag according to claim 2, wherein the recessed portion between the adjoining plate-shaped molded members is formed in a ring-shape extending radially outwardly from the main gas passage hole.

4. The gas generator for an air bag according to claim 2, wherein the recessed portion between the adjoining plate-shaped molded members is formed in a ring-shape extending from the outside of the doughnut-shaped molded member toward the center thereof.

5. The gas generator for an air bag according to claim 2, wherein the recessed portion between the adjoining plate-shaped molded members is formed in a plurality of grooves extending radially outward from the main gas passage hole.

6. The gas generator for an air bag according to claim 5, wherein the configuration of said grooves is a sector expanding from the main gas passage hole toward the outside.

7. The gas generator for an air bag according to claim 6, wherein said grooves pass through the plate-shaped molded member from the main gas passage hole to the outside.

8. The gas generator for an air bag according to claim 1, wherein a width of the noncontact surface is in the range from 0.05 to 0.5 mm and a ratio of the area of the noncontact portion to that of the entire overlapping portion is in the range from 5 to 70%.

9. The gas generator for an air bag according to claim 1, wherein the holding member holds the gas generating agent with a holding force in the range from 0.05 to 10 kg/cm$^2$.

10. The gas generator for an air bag according to claim 9, wherein the holding member comprises a metallic spring.

11

**11.** The gas generator for an air bag according to claim 1, wherein a combustible substance molded member is disposed close to the holding member.

**12.** A gas generator for an air bag, comprising a container having a combustion chamber therein, and a gas generating agent and an igniter accommodated in the combustion chamber, wherein said container is made of aluminum, and an igniting agent contained in the igniter comprises a binder containing sulfur and ammonium perchlorate, said igniting agent being fired at the temperature in the range from 150 to 300°C within 3 minutes.

**13.** The gas generator for an air bag according to claim 12, wherein the binder containing sulfur is polysulfide resin.

**14.** The gas generator for an air bag according to claim 12, wherein a powder of a metal, alloy and intermetallic compound of metal selected from the group of Al, B, Si, Mg, Ti, Zr and Ni is further added to the igniting agent.

# Fig.1

EP 0 589 042 A1

# Fig.2

# Fig.3

# Fig.4(A)

28a     28     5a     26a     25a

29a

IV(B)                      IV(B)

# Fig.4(B)

25a

26a

28

# Fig.5(A)

5c

28     25

30

# Fig.5(B)

30     25

28

# Fig.6

# Fig.7

# Fig.8

# Fig. 9

# Fig.10

# Fig.11

EP 0 589 042 A1

# INTERNATIONAL SEARCH REPORT

International Application No   PCT/JP92/00773

**I. CLASSIFICATION OF SUBJECT MATTER** (if several classification symbols apply, indicate all) ⁶

According to International Patent Classification (IPC) or to both National Classification and IPC

Int. Cl⁵   B60R21/26

**II. FIELDS SEARCHED**

| Minimum Documentation Searched ⁷ | |
|---|---|
| Classification System | Classification Symbols |
| IPC | B60R21/26, B60B21/32 |

| Documentation Searched other than Minimum Documentation to the Extent that such Documents are Included in the Fields Searched ⁸ |
|---|
| Jitsuyo Shinan Koho                    1926 – 1992<br>Kokai Jitsuyo Shinan Koho         1971 – 1992 |

**III. DOCUMENTS CONSIDERED TO BE RELEVANT** ⁹

| Category * | Citation of Document, ¹¹ with Indication, where appropriate, of the relevant passages ¹² | Relevant to Claim No. ¹³ |
|---|---|---|
| Y | JP, A, 3-28049 (TRW Vehicle Safety System Inc.), February 6, 1991 (06. 02. 91), Fig. 4 & US, A, 4938501 | 1-7 |
| Y | JP, A, 63-141851 (TRW Automotive Products Inc.), June 14, 1988 (14. 06. 88), Fig. 4 & US, A, 4817828 | 1-7, 10 |
| A | JP, A, 3-75289 (Nippon Koki K.K.), March 29, 1991 (29. 03. 91), Fig. 1 (Family: none) | 1-7 |

\* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 8, 1992 (08. 09. 92) | September 29, 1992 (29. 09. 92) |
| International Searching Authority | Signature of Authorized Officer |
| Japanese Patent Office | |

Form PCT/ISA/210 (second sheet) (January 1985)